# EUROPÄISCHE PATENTSCHRIFT

(11) **EP 1 135 632 B1**
(45) Veröffentlichungstag und Bekanntmachung des Hinweises auf die Patenterteilung: **04.09.2002**
(21) Anmeldenummer: 99968336.0
(22) Anmeldetag: 01.12.1999
(51) Int. Cl.: F16H 15/38, C21D 9/28

(54) **STUFENLOSES REIBRADGETRIEBE**
CONTINUOUSLY VARIABLE FRICTION GEAR
ENGRENAGE A FRICTION A REGLAGE CONTINU

(30) Priorität: 07.12.1998 DE 19856316
(43) Veröffentlichungstag der Anmeldung: 26.09.2001
(73) Patentinhaber: ZF FRIEDRICHSHAFEN Aktiengesellschaft, 88038 Friedrichshafen (DE)
(72) Erfinder: HOHER, Markus, D-88048 Friedrichshafen (DE)
(86) Internationale Anmeldenummer: EP9909339
(87) Internationale Veröffentlichungsnummer: WO00034687

(56) Entgegenhaltungen:
- EP-A- 0 866 242
- WO-A-99/30059
- DE-B- 1 219 306
- US-A- 4 173 501
- US-A- 4 257 495
- PATENT ABSTRACTS OF JAPAN vol. 010, no. 365 (M-542), 6. Dezember 1986 (1986-12-06) & JP 61 160621 A (AISIN WARNER LTD), 21. Juli 1986 (1986-07-21)
- PATENT ABSTRACTS OF JAPAN vol. 1998, no. 11, 30. September 1998 (1998-09-30) & JP 10 166233 A (JATCO CORP), 23. Juni 1998 (1998-06-23)

## Beschreibung

Die Erfindung betrifft ein stufenloses Reibradgetriebe mit einer Hauptwelle, einer Nebenwelle, zwei koaxial zur Hauptwelle angeordneten Eingangsscheiben mit toroidförmigen Innenflächen und zwei koaxial zur Hauptwelle angeordneten Ausgangsscheiben mit toroidförmigen Innenflächen, wobei je eine Eingangsscheibe und eine Ausgangsscheibe ein Paar bilden und die beiden Ausgangsscheiben spiegelsymmetrisch zueinander und nebeneinander angeordnet sind. Zwischen den Innenflächen der Paare der Eingangsscheiben und der Ausgangsscheiben sind mehrere Reibräder verschwenkbar angeordnet, welche zur Übertragung eines Drehmoments von der Eingangsscheibe auf die zugehörige Ausgangsscheibe dienen. Ferner ist eine Anpreßeinrichtung für eine der Eingangsscheiben vorgesehen, um diese in Richtung der Ausgangsscheiben zu beaufschlagen sowie ein Axialflansch, der auf der Hauptwelle befestigbar ist und an dem sich diejenige Eingangsscheibe abstützt, die nicht von der Anpreßeinrichtung beaufschlagt wird.

Reibradgetriebe der oben genannten Bauart werden auch als Variatoren bezeichnet und sind aus dem Stand der Technik vielfach seit langem bekannt , siehe zum Beispiel die US 42 57 495 A, und unterliegen einer permanenten Weiterentwicklung, insbesondere im Hinblick auf eine Verbesserung ihrer technischen Eigenschaften. Es ist Aufgabe der vorliegenden Erfindung, ein Getriebe der oben genannten Art konstruktiv zu vereinfachen, den erforderlichen Bauraum zu verkleinern, die Lebensdauer zu verlängern sowie eine kostengünstige Ausbildung anzugeben.

Erfindungsgemäß wird diese Aufgabe durch ein stufenloses Reibradgetriebe mit den Merkmalen des Anspruchs 1 gelöst. Dieser sieht vor, zur Befestigung des Axialflansches auf der Hauptwelle sowie auch zur Abstützung der axialen Kräfte einen segmentring zu verwenden. Dieser Ring und der dazugehörende Sitz auf der Hauptwelle sind zum einen konstruktiv einfacher ausgebildet als die bislang verwendete Wellenmutter mit Gewindesitz. Zum anderen wird dadurch vorteilhafterweise erreicht, daß im Unterschied zu der Befestigung des Axialflansches mit einer Wellenmutter das Gewinde auf der Hauptwelle und somit auch die Kerbwirkung des Gewindes auf die Hauptwelle entfällt, so daß sich die Lebensdauer der Hauptwelle erhöht. Ferner wird durch die Verwendung des Segmentringes anstelle der im wesentlichen hülsenförmigen Wellenmutter eine vorteilhafte Verkürzung der axialen Baulänge der Hauptwelle und somit auch eine vorteilhafte Verkürzung des Getriebegehäuses ermöglicht.

Der Segmentring besteht aus wenigstens zwei Segmenten , die in radialer Richtung gesichert sind, und ist im wesentlichen diametral teilbar ausgeführt. Der Segmentring weist beispielsweise eine im wesentlichen rechteckförmige Querschnittsfläche auf. Damit wird eine geometrische Form des Befestigungselementes angegeben, welche zum einen definierte Anlageflächen aufweist und zum anderen einfach herstellbar ist.

Zur einfachen Montage des Segmentringes in dem Getriebe ist auf der Hauptwelle eine Nut vorgesehen, in welche die beiden Ringsegmente leicht einsetzbar sind.

Der Segmentring stützt sich dabei in axialer Richtung einerseits an einem Bund der Hauptwelle und andererseits an einer Anlagefläche des Axialflansches ab. Durch den Segmentring sind somit definierte Anlageflächen realisierbar, welche eine exakte Führung des Axialflansches, z. B. eine Führung der Anlagefläche des Axialflansches rechtwinklig zur Längsachse der Hauptwelle, sicherstellen. Durch diese exakte Ausrichtung der mechanisch hochbelasteten Bauteile zueinander wird eine gleichmäßige Belastung der einzelnen Bauteile und somit vorteilhafterweise eine Erhöhung der Lebensdauer des Getriebes erreicht.

Die radiale Sicherung der Ringsegmenten verhindert ein Ablösen der Ringsegmente von der Hauptwelle in radialer Richtung durch Zentrifugalkräfte.

Dies wird beispielsweise durch eine ringförmige Anlagefläche an dem Axialflansch realisiert, wobei die radial äußere Ringfläche des Segmentrings an dieser Anlagefläche des Axialflansches anschlägt.

Alternativ kann die radiale Sicherung des Segmentrings auch durch andere Elemente, z. B. einen Haltering, Schrauben oder ähnliche Bauelemente, realisiert werden.

Zur Erzeugung einer Grundanpreßkraft in dem Variator, welche von dem Segmentring aufgenommen wird, ist ein Federelement vorgesehen, welches beispielsweise als Großserienbauteil kostengünstig herstellbar ist.

Das Federelement ist konzentrisch auf der Hauptwelle angeordnet und einerseits an einem Bund dieser Welle abgestützt. Durch dieses Federelement wird andererseits die Anpreßeinrichtung in Richtung auf den Segmentring hin mit der Grundanpreßkraft beaufschlagt. Dadurch wird vorteilhafterweise eine einfache Montage des Segmentrings ermöglicht. Zur Montage wird der Axialflansch in Richtung auf die Anpreßeinrichtung hingeschoben und die Feder so weit zusammengepreßt, bis die Nut frei zugänglich ist. Nach Einsetzen des Segmentrings in die Nut wird der Segmentring über die Anpreßeinrichtung, die Reibradpaare sowie den Axialflansch mit der Grundanpreßkraft der Feder beaufschlagt.

Erfindungsgemäß ist die Verwendung unterschiedlich dicker Segmentringe möglich. Dadurch wird, je nach Wahl der Dicke des verwendeten Segmentrings, der axiale Abstand zwischen dem Segmentring und dem Federelement variiert und somit die Grundanpreßkraft in dem Variator eingestellt.

Ferner wird vorgeschlagen, die Hauptwelle auf ihrer gesamten Länge oberflächenzuhärten. Diese Maßnahme erhöht vorteilhafterweise die Lebensdauer der Welle und somit des gesamten Getriebes. Diese Härtebehandlung ist jedoch erst möglich nach Wegfall der bislang gebräuchlichen Wellenmutter, da das zur Befestigung der Mutter erforderliche Gewinde auf der Welle eine Oberflächenhärtung des Wellenendes bislang verhinderte.

Durch die Ausbildung der Nut in der Hauptwelle wird ferner erreicht, daß auch der Durchmesser des Wellenendes größer ist, als bei Verwendung der bislang üblichen Wellenmutter. Dadurch wiederum kann ein Lager mit größerem Durchmesser zur Lagerung des Wellenendes verwendet und die Lebensdauer der Welle, des Lagers und somit des Getriebes erhöht werden.

Weitere Ziele, Merkmale, Vorteile und Anwendungsmöglichkeiten der Erfindung ergeben sich aus der nachfolgenden Beschreibung der Ausführungsbeispiele, die in den Zeichnungen näher dargestellt sind. Dabei bilden alle beschriebenen und/oder bildlich dargestellten Merkmale für sich oder in beliebiger sinnvoller Kombination den Gegenstand der Erfindung, unabhängig von ihrer Zusammenfassung in den Ansprüchen und deren Rückbeziehung.
Es zeigen:
- Fig. 1: ein erfindungsgemäßes stufenloses Reibradgetriebe in Schnitt-Darstellung;
- Fig. 2: ein Wellenende der Hauptwelle mit dem erfindungsgemäßen Segmentring entsprechend Detail 20 in Fig. 1 in vergrößerter Darstellung und
- Fig. 3: ein Wellenende mit Wellenmutter gemäß dem Stand der Technik in vergrößerter Darstellung und im Schnitt.

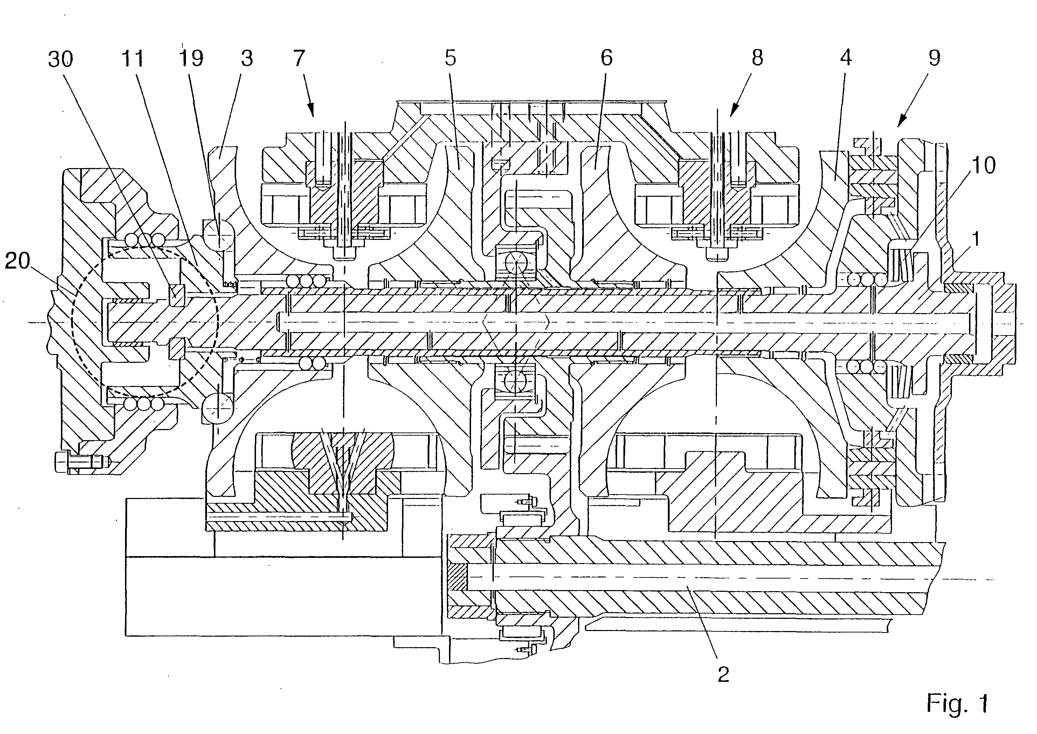

Das erfindungsgemäße Reibradgetriebe (Fig. 1) besteht im wesentlichen aus einer Hauptwelle 1, auf der koaxial Eingangsscheiben 3, 4 und Ausgangsscheiben 5, 6 paarweise zueinander angeordnet sind. Zwischen diesen Eingangsscheiben 3, 4 und Ausgangsscheiben 5, 6 befinden sich Reibräder 7, 8 zur Übertragung eines Drehmoments von der Hauptwelle 1 auf eine parallel zu dieser angeordneten Nebenwelle 2. An einem Ende der Hauptwelle 1 ist eine Anpreßeinrichtung 9 angeordnet, welche von einem Federelement 10 beaufschlagt wird. Am anderen Ende der Hauptwelle 1 ist ein Axialflansch 11 über ein Lager 19 mit der Eingangsscheibe 3 verbunden. Der Axialflansch 11 wird von einem Segmentring 30 gehalten, welcher in einer Nut auf der Hauptwelle 1 eingesetzt ist. Mittels des Federelements 10 wird somit eine Grundanpreßkraft zwischen den Scheibenpaaren 3, 4, 5, 6 und den Reibradpaaren 7, 8 erzeugt, welche sich an dem Segmentring 30 abstützt.

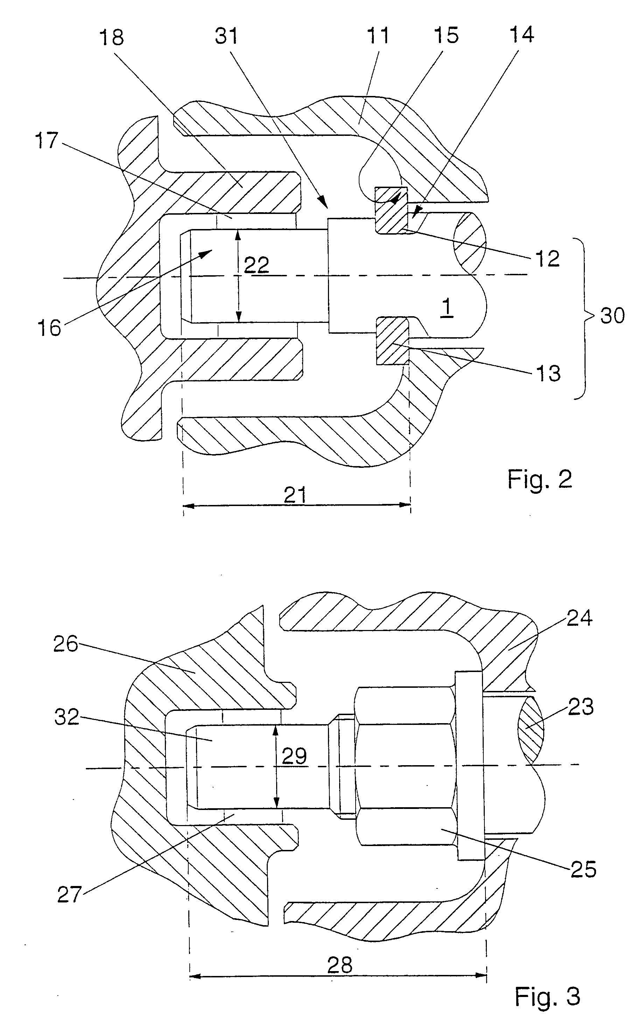

Der Segmentring 30 (Fig. 2) besteht aus einem ersten Ringsegment 12 sowie einem zweiten Ringsegment 13, welche durch Teilung eines kreisförmigen Ringes in im wesentlichen diametraler Richtung entstehen. Die Ringsegmente 12 und 13 sind in die Nut 14 der Hauptwelle 1 derart eingepaßt, daß die von dem Federelement erzeugte Grundanpreßkraft über den Axialflansch 11 auf einen Wellenbund 31 der Hauptwelle 1 übertragen wird. Ein Teil der radial äußeren Mantelfläche der Ringsegmente 12, 13 stützt sich an einer ringförmigen Anlagefläche 15 des Axialflansches 11 ab. Dadurch wird vorteilhafterweise beim Drehen der Welle 1 ein Ablösen der Ringsegmente 12, 13 von der Welle 1 durch Zentrifugalkräfte verhindert. Auf dem Zapfen 16 mit dem Durchmesser 22 der Welle 1 ist ein Lager 17 angeordnet, welches sich in einer Aufnahme 18 abstützt. Die Länge des Zapfens 16, welche zur Anbringung des Segmentrings 30 sowie des Lagers 17 erforderlich ist, ist mit 21 gekennzeichnet.

In einer Ausbildung des Getriebes gemäß dem Stand der Technik (Fig. 3) ist auf einer Hauptwelle 23 ein Axialflansch 24 vorgesehen und durch eine Wellenmutter 25 gesichert. Auf dem Zapfen 32 der Welle 23 ist ein Lager 27 zur Führung der Welle in einer Aufnahme 26 vorgesehen. Die erforderliche Montagelänge 28 zur Unterbringung der Wellenmutter 25 sowie des Lagers 27 auf dem Zapfen 32 ist im Vergleich zu der erfindungsgemäßen Ausbildung gemäß Fig. 2 erkennbar länger. Damit wird durch die erfindungsgemäße Ausführung des Segmentrings vorteilhafterweise eine geringere Baulänge des Getriebes erreicht als bislang erforderlich.

Ferner ist der Durchmesser 29 des Zapfens 32 gemäß dem Stand der Technik deutlich dünner ausgebildet als der Durchmesser 22 des Zapfens 16 gemäß der erfindungsgemäßen Ausgestaltung, wie im Vergleich der Fig. 2 und 3 erkennbar ist. Somit weist der Zapfen 16 der Hauptwelle 1 entsprechend der Erfindung eine höhere Festigkeit auf, als der Zapfen 32 nach dem Stand der Technik. Durch den Wegfall des Gewindes zur Befestigung der Wellenmutter 25 nach Fig. 3 ist es außerdem möglich, nun auch den Zapfen 16 (Fig. 2) und somit die Hauptwelle 1 über ihre gesamte Baulänge oberflächenzuhärten, wodurch ebenfalls eine Steigerung der Dauerfestigkeit der Welle und eine Erhöhung der Lebensdauer des Getriebes erreicht wird.

### Bezugszeichen

- 1: Hauptwelle
- 2: Nebenwelle
- 3: Eingangsscheibe
- 4: Eingangsscheibe
- 5: Ausgangsscheibe
- 6: Ausgangsscheibe
- 7: Reibrad
- 8: Reibrad
- 9: Anpreßeinrichtung
- 10: Federelement
- 11: Axialflansch
- 12: Ringsegment
- 13: Ringsegment
- 14: Nut
- 15: Anlagefläche
- 16: Zapfen
- 17: Lager
- 18: Aufnahme
- 19: Lager
- 20: Detail
- 21: Länge
- 22: Durchmesser
- 23: Hauptwelle
- 24: Axialflansch
- 25: Wellenmutter
- 26: Aufnahme
- 27: Lager
- 28: Länge
- 29: Durchmesser
- 30: Segmentring
- 31: Wellenbund
- 32: Zapfen

## Patentansprüche

1. Stufenloses Reibradgetriebe, mit:
- einer Hauptwelle (1),
- einer Nebenwelle (2),
- zwei koaxial zur Hauptwelle (1) angeordneten Eingangsscheiben (3, 4) mit toroidförmigen Innenflächen,
- zwei koaxial zur Hauptwelle (1) angeordneten Ausgangsscheiben (5, 6) mit toroidförmigen Innenflächen, wobei je eine Eingangsscheibe (3, 4) und eine Ausgangsscheibe (5, 6) ein Paar bilden und die beiden Ausgangsscheiben (5, 6) spiegelsymmetrisch zueinander und nebeneinander angeordnet sind,
- mehreren Reibrädern (7, 8), die zwischen den Innenflächen der Paare der Eingangsscheiben (3, 4) und Ausgangsscheiben (5, 6) verschwenkbar angeordnet sind zur Übertragung eines Drehmomentes von der Eingangsscheibe (3, 4) auf die zugehörige Ausgangsscheibe (5, 6),
- eine Anpreßeinrichtung (9) für eine der Eingangsscheiben (3, 4), um diese in Richtung Ausgangsscheiben (5, 6) zu beaufschlagen,
- einem Axialflansch (11), der auf der Hauptwelle (1) befestigbar ist und an dem sich diejenige Eingangsscheibe (3) abstützt, die nicht von der Anpreßeinrichtung (9) beaufschlagt wird,
**dadurch gekennzeichnet, daß** zur Befestigung des Axialflansches (11) auf der Hauptwelle (1) ein Segmentring (30) vorgesehen ist, welcher aus wenigstens zwei im wesentlichen halbkreisförmigen Ringsegmenten (12, 13), die in radialer Richtung gesichert sind, besteht.

2. Stufenloses Reibradgetriebe nach Anspruch 1, **dadurch gekennzeichnet, daß** der Segmentring (30) in eine Nut (14) der Hauptwelle (1) einsetzbar ist.

3. Stufenloses Reibradgetriebe nach Anspruch 2, **dadurch gekennzeichnet, daß** der Segmentring (30) in axialer Richtung einerseits an einem Wellenbund (31) der Hauptwelle (1) und andererseits an dem Axialflansch (11) abstützbar ist.

4. Stufenloses Reibradgetriebe nach einem der vorangehenden Ansprüche, **dadurch gekennzeichnet, daß** der Axialflansch (11) eine ringförmige Anlagefläche (15) zur radialen Sicherung des Segmentrings (30) aufweist.

5. Stufenloses Reibradgetriebe nach einem der vorangehenden Ansprüche, **dadurch gekennzeichnet, daß** zur radialen Sicherung des Segmentrings (30) ein Haltering, Schrauben oder ähnliche Elemente verwendet werden.

6. Stufenloses Reibradgetriebe nach einem der vorangehenden Ansprüche, **dadurch gekennzeichnet, daß** ein Federelement (10) zur Erzeugung einer Grundanpreßkraft zwischen den Eingangs- und Ausgangsscheiben (3, 4, 5, 6) und den Reibrädern (7, 8) vorgesehen ist und die Grundanpreßkraft von dem Segmentring (30) aufgenommen wird.

7. Stufenloses Reibradgetriebe nach Anspruch 6, **dadurch gekennzeichnet, daß** das Federelement (10) konzentrisch auf der Hauptwelle (1) angeordnet ist und die Anpreßeinrichtung (9) in Richtung auf den Segmentring (30) hin mit der Grundanpreßkraft beaufschlagt.

8. Stufenloses Reibradgetriebe nach Anspruch 6 oder 7, **dadurch gekennzeichnet, daß** die Grundanpreßkraft durch die Dicke des Segmentrings (30) einstellbar ist.

9. Stufenloses Reibradgetriebe nach einem der vorangehenden Ansprüche, **dadurch gekennzeichnet, daß** die Hauptwelle (1) auf ihrer gesamten Länge oberflächengehärtet ist.

## Claims

1. The invention relates to a continuously variable friction gear with
- a main shaft (1);
- an auxiliary shaft (2);
- two input disks (3, 4) with toroidal inner faces and arranged coaxially in relation to the main shaft (1);
- two output disks (5, 6) with toroidal inner faces and arranged coaxially in relation to the main shaft, with one input disk (3,4) and one output disk (5,6) forming a pair and the two output disks (5, 6) arranged dissymmetrically and next to each other;
- several pivoting friction wheels (7,8) arranged between the inner faces of the pairs of input disks (3,4) and output disks (5,6) for transmitting torque from the input disk (3,4) to the corresponding output disk (5,6);
- a pressure device (9) for one of the input disks (3,4) for acting on it in the direction of the output disks (5,6);
- an axial flange (11) mountable to the main shaft (1), and on which the input disk (3) not actuated by the pressure device (9) is supported;
**characterized in that** a segment ring (30) is arranged on the main shaft (1) for fixing the axial flange (11), with the segment ring consisting of at least two essentially semicircular ring segments (12, 13) fixed in radial direction.

2. A continuously variable friction gear according to claim 1, **characterized in that** the segment ring (30) can be inserted in a groove (14) of the main shaft (1).

3. A continuously variable friction gear according to claim 2, **characterized in that** the segment ring (30) is supportable in axial direction on the one hand on a shaft collar (31) of the main shaft (1) and on the other hand on the axial flange (11).

4. A continuously variable friction gear according to one of the preceding claims, **characterized in that** the axial flange (11) has a ring-shaped contact surface (15) for radial locking of the segment ring (30).

5. A continuously variable friction gear according to one of the preceding claims, **characterized in that** a holding ring, bolts or similar elements are used for radial locking of the segment ring (30).

6. A continuously variable friction gear according to one of the preceding claims, **characterized in that** a spring element (10) is arranged between the input and output disks (3,4,5,6) and the friction wheels (7,8) for producing a basic contact pressure, which is picked up by the segment ring (30).

7. A continuously variable friction gear according to claim 6, **characterized in that** the spring element (10) is arranged concentrically on the main shaft (1) and actuates the pressure device (9) with the basic contact pressure in the direction of the segment ring (30).

8. A continuously variable friction gear according to claim 6 or 7, **characterized in that** the basic contact pressure is adjustable via the thickness of the segment ring (30).

9. A continuously variable friction gear according to one of the preceding claims **characterized in that** the total length of the main shaft (1) is surface-hardened.

## Revendications

1. Boîte de vitesses toroïdale à variation continue dotée de :
- un arbre principal (1) ;
- un arbre secondaire (2) ;
- deux disques d'entrée (5, 15) disposés de façon coaxiale par rapport à l'arbre principal (1) et comportants des faces intérieures toroïdales ;
- deux disques de sortie (5, 6) disposés de façon coaxiale par rapport à l'arbre principal (1) comportants des faces intérieures toroïdales, sachant que respectivement un disque d'entrée (3, 4) et un disque de sortie (5, 6) forment une unité et que les deux disques de sortie (5, 6) sont disposés de façon symétrique l'un par rapport à l'autre et qu'ils sont juxtaposés ;
- plusieurs roues à friction (7, 8) disposées de façon orientable entre les faces intérieures des unités composées de disques d'entrée (3, 4) et de disques de sortie (5,6), afin qu'ils puissent transmettre un couple respectivement du disque d'entrée (3, 4) au disque de sortie associé (5, 6);
- un dispositif de serrage (9) pour un des disques d'entrée (3, 4), afin de pouvoir mettre sous précharge le disque d'entrée (3, 4) dans la direction des disques de sortie (5, 6);
- une bride axiale (11) qui peut être fixée sur l'arbre principal (1) et sur laquelle appuie celui des disques d'entrée (3) qui n'est pas mis sous précharge par le dispositif de serrage (9), **caractérisée en ce que** pour la fixation de la bride axiale (11) sur l'arbre principal (1) est prévu un segment (30) composé d'au moins deux segments annulaires (12, 13) essentiellement réalisés en forme demi-circulaire et bloqués en sens radial.

2. Boîte de vitesses toroïdaie à variation continue selon la revendication 1, **caractérisée en ce que** le segment (30) peut être monté dans une rainure (14) de l'arbre principal (1).

3. Boîte de vitesses toroïdale à variation continue selon la revendication 2, **caractérisée en ce que**, d'une part, le segment (30) peut être logé dans le sens axial dans un collet (31) de l'arbre principal (30) et appuie, d'autre part, sur la bride axiale (11).

4. Boîte de vitesses toroïdale à variation continue selon une des revendications précédentes, **caractérisée en ce que** la bride axiale (11) est dotée d'une face d'appui en forme annulaire (15) pour la fixation radiale du segment (30).

5. Boîte de vitesses toroïdaie à variation continue selon une des revendications précédentes, **caractérisée en ce que** pour la fixation radiale du segment (30) sont utilisés une bague de retenue, des vis ou des éléments similaires.

6. Boîte de vitesses toroïdale à variation continue selon une des revendications précédentes, **caractérisée en ce que** entre les disques d'entrée et les disques de sortie (3, 4, 5, 6) et les roues à friction (7, 6) est prévu un élément élastique (10) pour la génération de la force de pression initiale et **en ce que** la force de pression initiale est absorbée par le segment (30).

7. Boîte de vitesses toroïdale à variation continue selon une des revendications précédentes, **caractérisée en ce que** l'élément élastique (10) est disposé de façon concentrique sur l'arbre principal (1) et **en ce qu'**il met sous précharge le dispositif de pression (9) en direction du segment (30) avec une force de pression initiale.

8. Boîte de vitesses toroïdale à variation continue selon les revendications 6 ou 7, **caractérisée en ce que** la force de pression initiale peut être réglée en fonction de l'épaisseur des segments (30).

9. Boîte de vitesses toroïdale à variation continue selon une des revendications précédentes, **caractérisée en ce que** l'arbre principal (1) est trempé superficiellement sur toute sa longueur.
